# EUROPEAN PATENT APPLICATION

(11) **EP 4 835 379 A1**
(43) Date of publication of application: **04.11.2026**
(21) Application number: 25761053.5
(22) Date of filing: 26.02.2025
(51) Int. Cl.: F25D 11/00, B60P 3/20

(54) **TRANSPORT REFRIGERATOR UNIT**

(30) Priority: 01.03.2024 JP 2024030991
(71) Applicant: Mitsubishi Heavy Industries Thermal Systems, Ltd., Tokyo 100-8332 (JP)
(72) Inventor: NAKAI Shinichiro, Tokyo 100-8332 (JP); NISHII Tomohiro, Tokyo 100-8332 (JP); TAKAHASHI Wataru, Tokyo 100-8332 (JP)
(74) Representative: Cabinet Beau de Loménie
(86) International application number: PCT/JP2025/006606
(87) International publication number: WO 2025/182977

(57) **Abstract**

A transport refrigeration unit includes a container; and a transport refrigeration machine. The container has a first refrigerated compartment and a second refrigerated compartment that are divided in a width direction, and the transport refrigeration machine includes a main unit that has a main refrigeration cycle device including a compressor, a condenser that causes heat exchange between the refrigerant and outside air, an expansion valve through which the refrigerant flowing out from the condenser passes, and a first evaporator that causes heat exchange between the refrigerant and air in the first refrigerated compartment, and a remote unit that is provided only in the second refrigerated compartment and has a second evaporator that causes heat exchange between the refrigerant supplied from the main refrigeration cycle device and air in the second refrigerated compartment.

## Description

### Technical Field

The present disclosure relates to a transport refrigeration unit.

The present application claims priority based on Japanese Patent Application No. 2024-030991 filed in Japan on March 1, 2024, the contents of which are incorporated herein by reference.

### Background Art

In a vehicle equipped with a refrigeration machine, such as a refrigerated truck, a method of dividing a refrigerated compartment into a plurality of compartments and individually performing temperature control has been put into practical use. As this type of device, a device described in PTL 1 below is known. In a vehicle according to PTL 1 below, a refrigerated compartment is divided into two in a vehicle width direction, and cold air supplied from a refrigeration cycle device flows into one refrigerated compartment. Since one refrigerated compartment and the other refrigerated compartment communicate with each other, the cold air passes through one refrigerated compartment and then flows into the other refrigerated compartment.

### Citation List

### Patent Literature

[PTL 1] Japanese Unexamined Patent Application Publication No. 2013-139944

### Summary of Invention

### Technical Problem

However, in a case where a configuration in which cold air flows through a plurality of refrigerated compartments in order as described above is adopted, a temperature of a refrigerated compartment located on a downstream side in a flow direction of the cold air is inevitably higher than a temperature of a refrigerated compartment on an upstream side. As a result, a degree of freedom in temperature control is reduced, and there is a possibility that efficiency of cargo handling work is impaired. Therefore, there is an increasing demand for a transport refrigeration machine capable of freely setting a temperature in a plurality of refrigerated compartments.

The present disclosure provides a transport refrigeration unit capable of freely setting a temperature in a plurality of refrigerated compartments.

### Solution to Problem

According to the present disclosure, there is provided a transport refrigeration unit including: a container; and a transport refrigeration machine, in which the container is provided in a transport machine and has a first refrigerated compartment and a second refrigerated compartment that are divided in a width direction of the transport machine, and the transport refrigeration machine includes a main unit that has a main refrigeration cycle device including a compressor that compresses a refrigerant, a condenser that causes heat exchange between the compressed refrigerant and outside air, an expansion valve through which the refrigerant flowing out from the condenser passes, and a first evaporator that causes heat exchange between the refrigerant and air in the first refrigerated compartment, and a remote unit that is provided only in the second refrigerated compartment and has a second evaporator that causes heat exchange between the refrigerant supplied from the main refrigeration cycle device and air in the second refrigerated compartment.

### Advantageous Effects of Invention

According to the present disclosure, it is possible to provide a transport refrigeration unit capable of freely setting a temperature in a plurality of refrigerated compartments.

### Brief Description of Drawings

FIG. 1 is a schematic diagram showing a configuration of a vehicle equipped with a transport refrigeration machine according to an embodiment of the present disclosure.
FIG. 2 is a top view showing a configuration of the transport refrigeration machine according to the embodiment of the present disclosure.
FIG. 3 is a cross-sectional view taken along line III-III of FIG. 2.
FIG. 4 is a cross-sectional view taken along line IV-IV of FIG. 2.
FIG. 5 is a cross-sectional view taken along line V-V of FIG. 2.
FIG. 6 is a circuit diagram of the transport refrigeration machine according to the embodiment of the present disclosure.

### Description of Embodiments

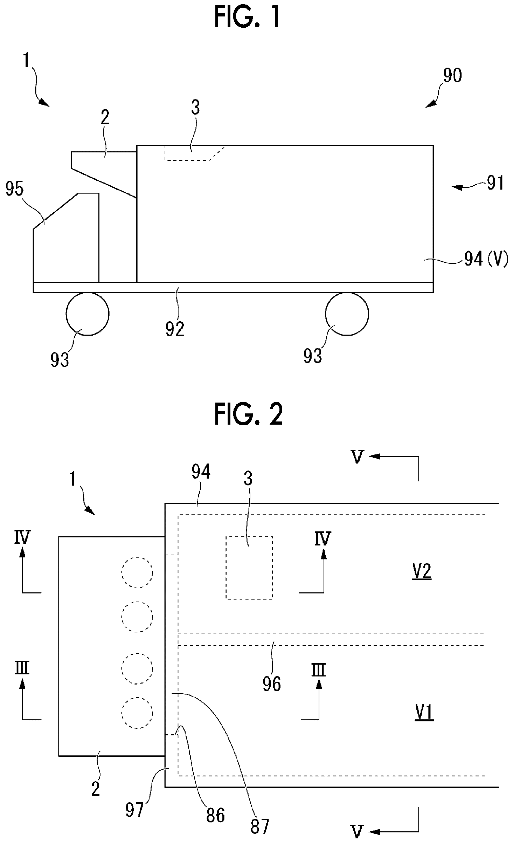

Hereinafter, a transport refrigeration machine 1 according to an embodiment of the present disclosure will be described with reference to FIGS. 1 to 6.

### (Configuration of Transport Vehicle 90)

First, a transport vehicle 90 (transport machine) on which the transport refrigeration machine 1 is mounted will be described with reference to FIG. 1. As shown in FIG. 1, the transport vehicle 90 includes a vehicle body 91 and a transport refrigeration unit 200.

The vehicle body 91 includes a chassis 92, a plurality of wheels 93, and a cabin 95. The chassis 92 has a beam shape extending in a traveling direction of the transport vehicle 90. As an example, the chassis 92 is a ladder frame. A pair of the plurality of wheels 93 is provided on each of both sides of the chassis 92 in a width direction. At least some of the plurality of wheels 93 are rotationally driven by a driving force of an engine mounted on the chassis 92. In addition, the cabin 95 is attached to a front side portion of the chassis 92. The cabin 95 is a housing that accommodates a driving device, a driving platform, or the like.

### (Configuration of Transport Refrigeration Unit 200)

As shown in FIG. 1 or 2, the transport refrigeration unit 200 includes a container 94 and the transport refrigeration machine 1. The container 94 is provided on a rear side of the cabin 95. As an example, the container 94 has a rectangular parallelepiped shape, and a space as a refrigerated compartment V is formed inside the container 94.

More specifically, as shown in FIG. 2, the refrigerated compartment V has two spaces (a first refrigerated compartment V1 and a second refrigerated compartment V2) partitioned in a vehicle width direction. The first refrigerated compartment V1 is a space on a left side in a traveling direction of the transport vehicle 90. The second refrigerated compartment V2 is a space on a right side in the traveling direction. A partition wall 96 extending in the traveling direction is provided between the first refrigerated compartment V1 and the second refrigerated compartment V2. Cold air generated by the transport refrigeration machine 1, which will be described later, is supplied to the first refrigerated compartment V1 and the second refrigerated compartment V2, and a low temperature state is maintained.

The transport refrigeration machine 1 includes a main unit 2 and a remote unit 3. The main unit 2 is disposed to protrude upward from a front wall 97 (that is, a wall facing a front side in the traveling direction) of the container 94 above the cabin 95. The main unit 2 is mainly provided to cool the first refrigerated compartment V1. The main unit 2 includes a main refrigeration cycle device 4, which will be described later. The remote unit 3 is attached to a ceiling portion of the second refrigerated compartment V2 in the container 94. The remote unit 3 is provided to independently perform temperature control of the second refrigerated compartment V2. The remote unit 3 includes a second evaporator 61, a second expansion valve 63, a third fan 62, and a second solenoid valve 64, which will be described later.

### (Configuration of Main Refrigeration Cycle Device 4)

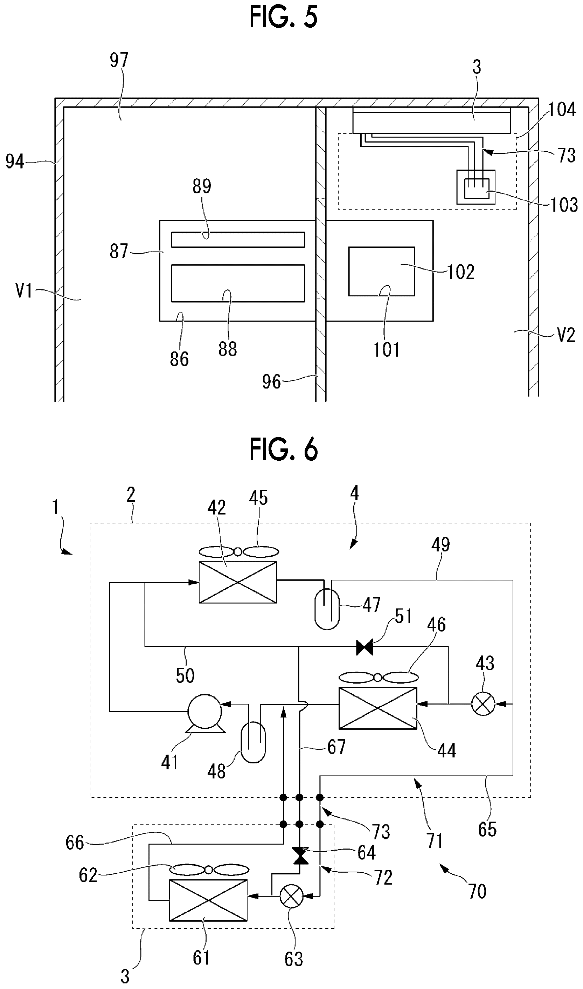

A circuit configuration of the main refrigeration cycle device 4 included in the main unit 2 will be described before describing the disposition or the shape of each device. As shown in FIG. 6, the main refrigeration cycle device 4 includes a compressor 41, a condenser 42, a first expansion valve 43 (expansion valve), a first evaporator 44, a first fan 45, a second fan 46, a receiver 47, an accumulator 48, a circulation line 49, a bypass line 50, and a first solenoid valve 51.

The circulation line 49 is filled with a refrigerant. The compressor 41, the condenser 42, the first expansion valve 43, and the first evaporator 44 are disposed on the circulation line 49 in this order. The compressor 41 compresses the refrigerant to discharge a high-temperature and high-pressure refrigerant. The condenser 42 is, for example, a tube-and-fin type heat exchanger. In the condenser 42, the refrigerant flowing in from the compressor 41 exchanges heat with outside air. As a result, the refrigerant has a low temperature. Further, the pressure and the temperature of the refrigerant are lowered as the refrigerant having the low temperature passes through the first expansion valve 43. The first evaporator 44 is a heat exchanger similar to the condenser 42. In the first evaporator 44, the refrigerant flowing in from the first expansion valve 43 and the air in the first refrigerated compartment V1 exchange heat. As a result, the refrigerant is heated by taking heat from the air, while the air in the first refrigerated compartment V1 is cooled.

The first fan 45 is a blower provided in conjunction with the condenser 42. By driving the first fan 45, the efficient supply of the outside air for condensation is promoted. The second fan 46 is a blower provided in conjunction with the first evaporator 44. By driving the second fan 46, the supply of the air in the first refrigerated compartment V1 to the first evaporator 44 is promoted. The receiver 47 and the accumulator 48 are provided to separate the refrigerant into gas and liquid. The receiver 47 is provided between the first evaporator 44 and the compressor 41, and the accumulator 48 is provided between the condenser 42 and the first expansion valve 43.

The bypass line 50 is a pipe line for a so-called hot gas bypass. The bypass line 50 connects a section between the compressor 41 and the condenser 42 and a section between the first expansion valve 43 and the first evaporator 44 in the circulation line 49. A first solenoid valve 51 is provided on the bypass line 50. The first solenoid valve 51 is an on-off valve capable of switching a flow state of the refrigerant in the bypass line 50. When the first solenoid valve 51 is in an open state, the refrigerant discharged from the compressor 41 flows through the bypass line 50 toward the first evaporator 44 without flowing toward the condenser 42. This is to prevent the temperature (pressure) of the first evaporator 44 from being excessively lowered or the liquid refrigerant from being sucked into the compressor 41 when the cooling load is small (when there is no object to be cooled).

### (Circuit Configuration of Remote Unit 3)

The remote unit 3 includes a second evaporator 61, a third fan 62, a second expansion valve 63, a second solenoid valve 64, a remote supply line 65, a remote discharge line 66, and a remote bypass line 67. The second evaporator 61 is, for example, a heat exchanger having a smaller refrigerant capacity than the first evaporator 44. The remote supply line 65 is connected to an inlet side of the second evaporator 61. One end of the remote supply line 65 is connected to the section between the receiver 47 and the first expansion valve 43 in the circulation line 49 described above. That is, a part of the refrigerant flowing through the circulation line 49 is taken out and flows toward the second evaporator 61 through the remote supply line 65. In addition, the second expansion valve 63 is disposed on the remote supply line 65. The second expansion valve 63 is provided to lower the pressure and the temperature of the refrigerant, similarly to the first expansion valve 43.

The remote discharge line 66 is connected to an outlet side of the second evaporator 61. One end of the remote discharge line 66 is connected to the section between the first evaporator 44 and the accumulator 48 in the circulation line 49. That is, the refrigerant discharged from the second evaporator 61 is returned to the circulation line 49 through the remote discharge line 66. The third fan 62 is a blower provided to forcibly supply the air in the second refrigerated compartment V2 to the second evaporator 61.

The remote bypass line 67 connects the above-described bypass line 50 and the section between the second expansion valve 63 and the second evaporator 61 in the remote supply line 65. When the bypass operation described above is performed, the refrigerant in the bypass line 50 can be distributed by the remote bypass line 67 and can flow toward the second evaporator 61.

The pipes (the remote supply line 65, the remote discharge line 66, and the remote bypass line 67) connecting the main unit 2 and the remote unit 3 configured as described above are physically configured by a "connection pipe 70". The connection pipe 70 includes a first pipe 71, a second pipe 72, and a relay pipe 73. The first pipe 71 is a portion extending from the main refrigeration cycle device 4 side of each of the remote supply line 65, the remote discharge line 66, and the remote bypass line 67, and the first pipe 71 is a portion connected to the main refrigeration cycle device 4. The second pipe 72 is a portion extending from the second evaporator 61 side of these lines, and the second pipe 72 is a portion connected to the second evaporator 61. The relay pipe 73 connects the first pipe 71 and the second pipe 72. Although details will be described later, the relay pipe 73 is detachably attached to the first pipe 71 and the second pipe 72.

### (Disposition of Each Device in Main Unit 2)

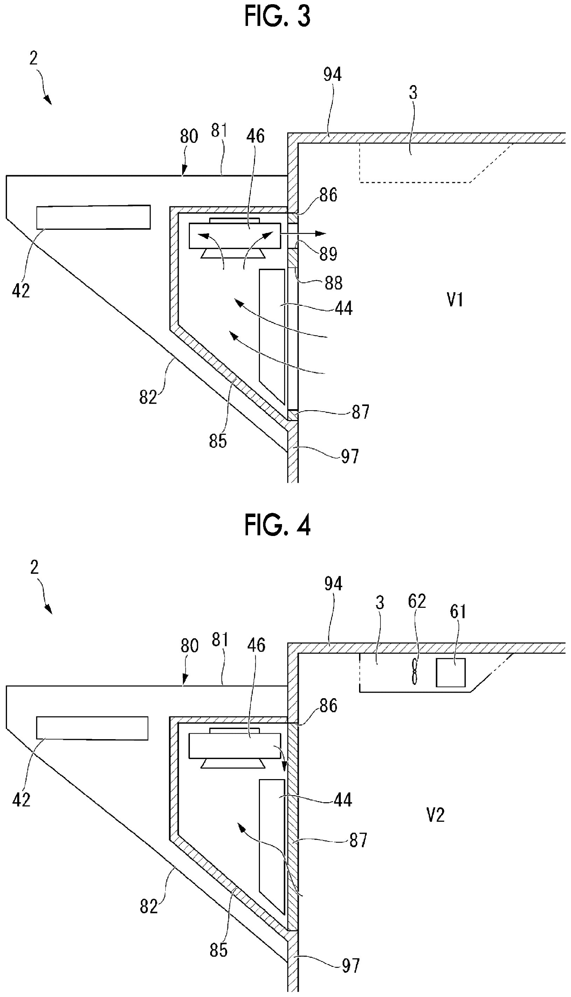

Subsequently, the disposition of each device included in the main unit 2 will be described with reference to FIGS. 3 to 5. As shown in FIG. 3, the main unit 2 is accommodated in a unit cover 80. Specifically, the unit cover 80 accommodates the condenser 42, the first evaporator 44, and the second fan 46. The unit cover 80 has a triangular cross-sectional shape when viewed from the vehicle width direction. A top surface 81 of the unit cover 80 extends in the horizontal direction, and a bottom surface 82 extends downward from the front side toward the rear side. The condenser 42 is accommodated in a region on the front side in the unit cover 80.

An internal cover 85 is provided in a region on the rear side of the condenser 42 in the unit cover 80. The internal cover 85 covers a front wall 97 of the container 94 from the front side. Here, as shown in FIG. 5, an opening 86 is formed in the front wall 97. The opening 86 is formed to straddle the first refrigerated compartment V1 and the second refrigerated compartment V2. A panel 87 is attached to the opening 86. A suction port 88 and a discharge port 89 are formed in the panel 87. The suction port 88 and the discharge port 89 are formed only in a portion of the panel 87 corresponding to the first refrigerated compartment V1. That is, the second refrigerated compartment V2 side of the opening 86 is closed by the panel 87 itself. A maintenance opening 101 for maintenance and inspection is formed in the closed portion. The maintenance opening 101 is normally closed by a maintenance panel 102.

In a space defined by the internal cover 85, a first evaporator 44 is disposed at a lower portion, and a second fan 46 is disposed above the first evaporator 44. The first evaporator 44 is disposed to face the suction port 88 from the front side. The second fan 46 is disposed to face the discharge port 89 from the front side. That is, when the second fan 46 is driven, a flow of air from the suction port 88 toward the first evaporator 44 is generated. The air is temperature-adjusted by exchanging heat with a refrigerant in the first evaporator 44, and then is returned to the first refrigerated compartment V1 again through the discharge port 89.

As shown in FIG. 4, the first evaporator 44 and the second fan 46 are disposed to protrude to the second refrigerated compartment V2 side. In addition, the remote unit 3 is attached to a ceiling of the second refrigerated compartment V2 to be covered from below by a remote cover. A second evaporator 61 and a third fan 62 are accommodated in the remote cover. Further, as shown in FIG. 5, a relay pipe 73 connecting the remote unit 3 and the main unit 2 is laid on an indoor side of a front wall 97 of the container 94. An end portion of the relay pipe 73 on the main unit 2 side extends to the main unit 2 through a pipe opening 103 formed in the front wall 97. In addition, the relay pipes 73 are covered from the rear side by a guard panel 104 when the device is completed. Further, the relay pipes 73 are detachably connected to the first pipe 71 and the second pipe 72 described above. In addition, the relay pipe 73 is formed as a so-called formed pipe, and can be installed without requiring bending or dimensional adjustment of the pipe at the installation site of the transport refrigeration machine 1. In other words, the extending direction and dimensions of the relay pipe 73 are set in advance, and the relay pipe 73 is preformed based on those dimensions.

### (Action and Effect)

Here, in the transport vehicle 90 in the related art, in a case where the refrigerated compartment V is divided into two in a vehicle width direction, it is common that one refrigerated compartment V is configured to allow cold air supplied from the refrigeration cycle device to flow into the one refrigerated compartment V. Since one refrigerated compartment V and the other refrigerated compartment V communicate with each other, the cold air passes through one refrigerated compartment V and then flows into the other refrigerated compartment V.

However, in a case where a configuration in which the cold air flows through the plurality of refrigerated compartments V in order as described above is adopted, the temperature in the refrigerated compartment V located on a downstream side in a flow direction of the cold air is inevitably higher than the temperature in the refrigerated compartment V on an upstream side. As a result, a degree of freedom in temperature control is reduced, and there is a possibility that efficiency of cargo handling work is impaired. Therefore, there is an increasing demand for the transport refrigeration machine 1 capable of freely setting the temperature in the plurality of refrigerated compartments V. In order to solve this problem, the configurations described above are adopted in the present embodiment.

According to the above configuration, the second evaporator 61 is provided independently in the second refrigerated compartment V2 in addition to the first evaporator 44 of the main refrigeration cycle device 4. Therefore, the first refrigerated compartment V1 can obtain the supply of the cold air by the first evaporator 44 of the main refrigeration cycle device 4, and the second refrigerated compartment V2 can also obtain the supply of the cold air by the second evaporator 61. As a result, it is possible to independently adjust the temperatures of the first refrigerated compartment V1 and the second refrigerated compartment V2. Therefore, it is possible to further improve the efficiency of the cargo handling work. In addition, since heat exchange can be performed in the first evaporator 44 and the second evaporator 61 by the refrigerant supplied from the single main refrigeration cycle device 4, it is possible to avoid an increase in the size of the device and an increase in the number of parts. Therefore, it is possible to reduce maintenance costs and manufacturing costs of the device. In particular, the transport refrigeration machine 1 can be easily applied to the transport vehicle 90 circulating in a foreign country (particularly, each country in Europe) without significantly changing the configuration of the refrigeration cycle device applied to the transport vehicle 90 circulating in Japan (Incidentally, this is because, in the transport vehicle 90 circulating in Japan, the refrigerated compartment V is generally partitioned into two in a traveling direction of the vehicle). In addition, on the contrary, by changing the positions of the suction port 88 and the discharge port 89 in the panel 87 of the main unit 2, it is possible to easily apply the transport refrigeration machine 1 to the transport vehicle 90 circulating in Japan without a large change. Therefore, it is possible to significantly improve the versatility of the device.

According to the above configuration, the discharge port 89 is provided only in a portion corresponding to the first refrigerated compartment V1. As a result, the cold air that has been subjected to heat exchange in the first evaporator 44 is mainly supplied only to the first refrigerated compartment V1. That is, the first refrigerated compartment V1 and the second refrigerated compartment V2 can be thermally insulated from each other. As a result, it is possible to precisely adjust the temperatures of the first refrigerated compartment V1 and the second refrigerated compartment V2 in a state of being independent of each other. Therefore, for example, the refrigerated compartment V can be used according to the nature of the cargo, such as accommodating chilled products in the first refrigerated compartment V1 and accommodating frozen products in the second refrigerated compartment V2. As a result, it is possible to further improve the efficiency of the cargo handling work or the delivery work.

According to the above configuration, the relay pipe 73 is detachably connected to the first pipe 71 and the second pipe 72. As a result, when the transport refrigeration machine 1 is incorporated into the vehicle, it is possible to separately perform the installation work for each of the main unit 2 side (that is, the main refrigeration cycle device 4 side) and the remote unit 3 side (that is, the second evaporator 61 side). Therefore, it is possible to realize the efficiency and speed-up of the installation work. In addition, by configuring the relay pipe 73 as a molded product, excessive precision is not required for the piping layout or the like at the work site. As a result, it is possible to further improve the efficiency and speed-up of the installation work.

According to the above configuration, the relay pipe 73 is covered with the guard panel 104. Therefore, it is possible to reduce the possibility that an article such as a cargo directly comes into contact with the relay pipe 73 during the cargo handling work. As a result, it is possible to significantly reduce the risk of refrigerant leakage or the like. Therefore, the transport refrigeration machine 1 can be stably operated for a long period of time.

According to the above configuration, since the maintenance opening 101 is formed, in a case where a failure or the like occurs in the main unit 2 (main refrigeration cycle device 4), the main unit 2 can be accessed from the second refrigerated compartment V2 side through the maintenance opening 101. That is, it is not necessary to remove the main unit 2 from the vehicle for maintenance. Therefore, the efficiency of the maintenance and inspection work can be significantly improved. Finally, since the operating rate of the transport vehicle 90 can be increased, the efficiency and profitability of the cargo handling work can be significantly improved.

According to the above configuration, by changing the positions of the suction port 88 and the discharge port 89 in the panel 87 of the main unit 2, the transport refrigeration machine 1 can be easily applied to the transport vehicle 90 without a large change, whether the transport vehicle 90 is distributed in Japan or distributed overseas.

### (Other Embodiments)

The embodiment of the present disclosure has been described in detail above with reference to the drawings. However, the specific configuration is not limited to the embodiment, and includes design changes and the like without departing from the gist of the present disclosure.

For example, the configuration of the main refrigeration cycle device 4 described in the above embodiment is an example, and can be appropriately changed according to the design and specifications. Specifically, the receiver 47, the accumulator 48, and the bypass line 50 can be omitted. Even in this case, the same actions and effects as those described above can be obtained.

In addition, in the above embodiment, the configuration for supplying the cold air to the two compartments of the first refrigerated compartment V1 and the second refrigerated compartment V2 has been described. However, the refrigerated compartment V can also be divided into three or more compartments according to the specifications and the like. In this case, by installing the evaporator for each compartment, each compartment can be independently temperature-regulated in the same manner as described above.

In addition, the application target of the transport refrigeration machine 1 is not limited to a vehicle that travels on land, and the transport refrigeration machine 1 can also be applied to, for example, the container 94 for a ship or a railway vehicle. In any case, the same operational effects as those described above can be obtained.

In addition, although not shown, a configuration can also be adopted in which a blocking panel that covers the above-described discharge port 89 and is detachably provided is further provided. In this case, the discharge port 89 is closed by the blocking panel, and the cold air is blocked, so that the first refrigerated compartment V1 can be maintained at a normal temperature. That is, the cargo at a normal temperature and the cargo at a low temperature can be transported at the same time in one vehicle. As a result, the versatility of the vehicle can be improved.

### <Supplementary Notes>

The transport refrigeration machine 1 described in each embodiment is understood as follows, for example.
(1) According to a first aspect, there is provided a transport refrigeration unit 200 including: a container 94; and a transport refrigeration machine 1, in which the container 94 is provided in a transport machine and has a first refrigerated compartment V1 and a second refrigerated compartment V2 that are divided in a width direction of the transport machine, and the transport refrigeration machine 1 includes a main unit 2 that has a main refrigeration cycle device 4 including a compressor 41 that compresses a refrigerant, a condenser 42 that causes heat exchange between the compressed refrigerant and outside air, an expansion valve through which the refrigerant flowing out from the condenser 42 passes, and a first evaporator 44 that causes heat exchange between the refrigerant and air in the first refrigerated compartment V1, and a remote unit 3 that is provided only in the second refrigerated compartment V2 and has a second evaporator 61 that causes heat exchange between the refrigerant supplied from the main refrigeration cycle device 4 and air in the second refrigerated compartment V2.
   According to the above configuration, the second evaporator 61 is provided independently in the second refrigerated compartment V2 in addition to the first evaporator 44 of the main refrigeration cycle device 4. Therefore, the first refrigerated compartment V1 can obtain the supply of the cold air by the first evaporator 44 of the main refrigeration cycle device 4, and the second refrigerated compartment V2 can also obtain the supply of the cold air by the second evaporator 61. As a result, it is possible to independently adjust the temperatures of the first refrigerated compartment V1 and the second refrigerated compartment V2.
(2) According to a second aspect, the transport refrigeration unit 200 of (1), in which the container 94 has a front wall 97 that covers front sides of the first refrigerated compartment V1 and the second refrigerated compartment V2, and a partition wall 96 that extends from the front wall 97 toward a rear side to partition the first refrigerated compartment V1 and the second refrigerated compartment V2, and a discharge port 89 that supplies air, which has exchanged heat with the refrigerant in the first evaporator 44, into the first refrigerated compartment V1 is formed only in a portion of the front wall 97 corresponding to the first refrigerated compartment V1.
   According to the above configuration, the discharge port 89 is provided only in a portion corresponding to the first refrigerated compartment V1. As a result, the cold air that has been subjected to heat exchange in the first evaporator 44 is mainly supplied only to the first refrigerated compartment V1. That is, the first refrigerated compartment V1 and the second refrigerated compartment V2 can be thermally insulated from each other. As a result, it is possible to precisely adjust the temperatures of the first refrigerated compartment V1 and the second refrigerated compartment V2 in a state of being independent of each other.
(3) According to a third aspect, the transport refrigeration unit 200 of (1) or (2), in which a connection pipe 70 that connects the main unit 2 and the remote unit 3 has a first pipe 71 connected to the main refrigeration cycle device 4 constituting the main unit 2, a second pipe 72 connected to a second evaporator 61 constituting the remote unit 3, and a relay pipe 73 that is provided in the second refrigerated compartment V2 and detachably connects the first pipe 71 and the second pipe 72.
   According to the above configuration, the relay pipe 73 is detachably connected to the first pipe 71 and the second pipe 72. As a result, when the transport refrigeration machine 1 is incorporated into the vehicle, it is possible to separately perform the installation work for each of the main unit 2 side (that is, the main refrigeration cycle device 4 side) and the remote unit 3 side (that is, the second evaporator 61 side).
(4) According to a fourth aspect, the transport refrigeration unit 200 of (3), further including a guard panel 104 that is provided in the second refrigerated compartment V2 and covers the relay pipe 73 from a rear side.
   According to the above configuration, the relay pipe 73 is covered with the guard panel 104. Therefore, it is possible to reduce the possibility that an article such as a cargo directly comes into contact with the relay pipe 73 during the cargo handling work. As a result, it is possible to significantly reduce the risk of refrigerant leakage or the like.
(5) According to a fifth aspect, the transport refrigeration unit 200 of (2), further including a maintenance opening 101 that is provided in a portion of the front wall 97 corresponding to the second refrigerated compartment V2 and through which the main unit 2 is accessible from the second refrigerated compartment V2.
   According to the above configuration, since the maintenance opening 101 is formed, in a case where a failure or the like occurs in the main unit 2 (main refrigeration cycle device 4), the main unit 2 can be accessed from the second refrigerated compartment V2 side through the maintenance opening 101.
(6) According to a sixth aspect, the transport refrigeration unit 200 of (2), further including a blocking panel that covers_the discharge port 89 and is detachably provided.
   According to the above configuration, since the discharge port 89 is closed by the blocking panel and the cold air is blocked, the first refrigerated compartment V1 can be maintained at a normal temperature, and thus the versatility of the vehicle can be improved.
(7) According to a seventh aspect, the transport refrigeration unit 200 of (1) or (2), in which the first evaporator 44 is disposed so as to protrude toward a second refrigerated compartment V2 side.

According to the above configuration, by changing the positions of the suction port 88 and the discharge port 89 in the panel 87 of the main unit 2, the transport refrigeration machine 1 can be easily applied to the transport vehicle 90 without a large change, whether the transport vehicle 90 is distributed in Japan or distributed overseas.

### Industrial Applicability

According to the present disclosure, it is possible to provide a transport refrigeration unit capable of freely setting a temperature in a plurality of refrigerated compartments.

### Reference Signs List

1: transport refrigeration machine
2: main unit
3: remote unit
4: main refrigeration cycle device
41: compressor
42: condenser
43: first expansion valve
44: first evaporator
45: first fan
46: second fan
47: receiver
48: accumulator
49: circulation line
50: bypass line
51: first solenoid valve
61: second evaporator
62: third fan
63: second expansion valve
64: second solenoid valve
65: remote supply line
66: remote discharge line
67: remote bypass line
70: connection pipe
71: first pipe
72: second pipe
73: relay pipe
80: unit cover
81: top surface
82: bottom surface
85: internal cover
86: opening
87: panel
88: suction port
89: discharge port
90: transport vehicle
91: vehicle body
92: chassis
93: wheel
94: container
95: cabin
96: partition wall
97: front wall
101: maintenance opening
102: maintenance panel
103: pipe opening
104: guard panel
200: transport refrigeration unit
V: refrigerated compartment
V1: first refrigerated compartment
V2: second refrigerated compartment

## Claims

1. A transport refrigeration unit comprising:
a container; and a transport refrigeration machine, wherein
the container is provided in a transport machine and has a first refrigerated compartment and a second refrigerated compartment that are divided in a width direction of the transport machine, and
the transport refrigeration machine includes
a main unit that has a main refrigeration cycle device including
a compressor that compresses a refrigerant,
a condenser that causes heat exchange between the compressed refrigerant and outside air,
an expansion valve through which the refrigerant flowing out from the condenser passes, and
a first evaporator that causes heat exchange between the refrigerant and air in the first refrigerated compartment, and
a remote unit that is provided only in the second refrigerated compartment and has a second evaporator that causes heat exchange between the refrigerant supplied from the main refrigeration cycle device and air in the second refrigerated compartment.

2. The transport refrigeration unit according to Claim 1, wherein
the container has
a front wall that covers front sides of the first refrigerated compartment and the second refrigerated compartment, and
a partition wall that extends from the front wall toward a rear side to partition the first refrigerated compartment and the second refrigerated compartment, and
a discharge port that supplies air, which has exchanged heat with the refrigerant in the first evaporator, into the first refrigerated compartment is formed only in a portion of the front wall corresponding to the first refrigerated compartment.

3. The transport refrigeration unit according to Claim 1 or 2, wherein
a connection pipe that connects the main unit and the remote unit has
a first pipe connected to the main refrigeration cycle device constituting the main unit,
a second pipe connected to a second evaporator constituting the remote unit, and
a relay pipe that is provided in the second refrigerated compartment and detachably connects the first pipe and the second pipe.

4. The transport refrigeration unit according to Claim 3, further comprising a guard panel that is provided in the second refrigerated compartment and covers the relay pipe from a rear side.

5. The transport refrigeration unit according to Claim 2, further comprising a maintenance opening that is provided in a portion of the front wall corresponding to the second refrigerated compartment and through which the main unit is accessible from the second refrigerated compartment.

6. The transport refrigeration unit according to Claim 2, further comprising a blocking panel that covers the discharge port and is detachably provided.

7. The transport refrigeration unit according to Claim 1 or 2, wherein the first evaporator is disposed so as to protrude toward a second refrigerated compartment side.
